# EUROPÄISCHE PATENTSCHRIFT

(11) **EP 2 601 493 B1**
(45) Veröffentlichungstag und Bekanntmachung des Hinweises auf die Patenterteilung: **11.09.2019**
(21) Anmeldenummer: 11741166.0
(22) Anmeldetag: 22.07.2011
(51) Int. Cl.: G01L 3/10, G01L 5/22, B62D 6/10, B62D 15/02, G01D 5/14, G01P 3/487

(54) **DREHMOMENTSENSORANORDNUNG MIT INDEXMAGNET**
TORQUE SENSOR ARRANGEMENT HAVING AN INDEX MAGNET
SYSTÈME DE DÉTECTION DE COUPLE À AIMANT D'INDEXATION

(30) Priorität: 23.12.2010 DE 102010064145; 03.08.2010 DE 102010038843
(43) Veröffentlichungstag der Anmeldung: 12.06.2013
(73) Patentinhaber: Continental Teves AG & Co. OHG, 60488 Frankfurt am Main (DE)
(72) Erfinder: ANTONI, Henrik, 63579 Freigericht (DE); GOLL, Manfred, 63695 Glauburg 2 (DE); KROHN, Thomas, 65824 Schwalbach (DE)
(86) Internationale Anmeldenummer: PCT/EP2011/062670
(87) Internationale Veröffentlichungsnummer: WO 2012/016863

(56) Entgegenhaltungen:
- WO-A1-2005/068962
- DE-A1- 10 121 749
- DE-A1- 19 836 451
- DE-A1-102005 038 516
- DE-A1-102009 033 242
- DE-T2- 60 200 499
- FR-A1- 2 930 988
- US-A1- 2002 027 192
- US-A1- 2006 049 821
- US-A1- 2010 092 117

## Beschreibung

Die Erfindung betrifft eine Sensoranordnung gemäß Oberbegriff von Anspruch 1 sowie die Verwendung der Sensoranordnung in Kraftfahrzeugen, insbesondere in der Lenkung.

Es sind Sensoranordnungen bekannt, die einen Drehmomentsensor mit magnetischem Messprinzip umfassen und die zusätzlich eine Drehwinkel-Indexeinheit aufweisen, wie beispielsweise in Druckschrift DE 10 2009 033 242 A1 beschrieben.

DE 10 2005 038516 A1 beschreibt eine Vorrichtung zur Detektion von Umdrehungen einer Lenkwelle mit einem Dauermagneten, wobei der Dauermagnet bei Drehung der Lenkwelle eine ringförmige Bahn beschreibt, die an einem Magnetfeldsensor vorbeiführt.

Die Erfindung hat sich die Aufgabe gestellt eine Sensoranordnung vorzuschlagen, die einen Drehmomentsensor mit magnetischem Messprinzip und eine Drehwinkel-Indexeinheit umfasst, wobei die Sensoranordnung relativ kompakt und relativ kostengünstig ausgebildet ist.

Diese Aufgabe wird erfindungsgemäß gelöst durch die Sensoranordnung gemäß Anspruch 1.

Die Sensoranordnung ist vorzugsweise in die Lenkung eines Kraftfahrzeugs integriert, zur Messung des fahrerseitigen Lenkmoments mit dem Drehmomentsensor und zur Erfassung der Lenkumdrehung mittels der Drehwinkel-Indexeinheit.

Das Statorpaket umfasst bevorzugt zumindest zwei Statorelemente, die gemeinsam zumindest teilweise umspritzt sind. Der Indexmagnet ist vorzugsweise als Permanentmagnet ausgebildet und der Träger ist zumindest teilweise aus magnetisch leitfähigem Material zur Führung des magnetischen Feldes des Indexmagneten ausgebildet und/oder zur Verstärkung des magnetischen Feldes des Indexmagneten. Insbesondere dient der Träger aus magnetisch leitfähigem Material dazu, die magnetischen Kreise des Drehmomentsensors und der Drehwinkel-Indexeinheit gegeneinander abzuschirmen bzw. von einander zu entkoppeln bzw. den magnetischen Kreis des Drehmomentsensors vor dem Magnetfeld des Indexmagneten weitgehend abzuschirmen bzw. zu trennen bzw. zu entkoppeln.

Bevorzugt weist der Drehmomentsensor einen Kollektor auf, insbesondere umfassend zwei magnetisch leitfähige Kollektorbleche, welcher berührungslos gegenüber dem Statorpaket angeordnet ist und das Magnetfeld dem wenigstens einen Magnetfeldsensorelement zuführt.

Es ist zweckmäßig, dass die Statorelemente jeweils ein ringförmiges Segment aufweisen, an welchem abragende, insbesondere bezüglich der Welle axial abragende Finger, angeordnet sind. Die Finger der beiden Statorelemente greifen besonders bevorzugt berührungslos ineinander. Die ringförmigen Segmente sowie die Finger sind magnetisch leitfähig ausgebildet.

Der erste und zweite Wellenabschnitt sind bevorzugt mittels eines Torsionsstabes miteinander verbunden.

Der Träger der Drehwinkel-Indexeinheit ist vorzugsweise ringförmig oder ringsegmentförmig ausgebildet und insbesondere an seinem Innenumfang mit dem magnetischen Encoder verbunden.

Die Drehwinkel-Indexeinheit umfasst bevorzugt zumindest ein Sensorelement bzw. Magnetfeldsensorelement, welches insbesondere schaltend ausgebildet ist, besonders bevorzugt ein schaltendes Hallsensorelement.

Vorzugsweise ist der Indexmagnet durch Spritzguss auf den Träger aufgebracht und mit dem Träger formschlüssig verbunden, insbesondere indem der Indexmagnet Ausnehmungen des Trägers durchgreift oder den Träger umgreift.

Der Indexmagnet ist vorzugsweise als Kunststoffkörper mit eingebetteten Magnetpartikeln ausgebildet.

Der Indexmagnet umfasst zweckmäßigerweise hinsichtlich seiner Magnetisierung einen Hauptpol mit zwei angrenzenden Nebenpolen, also eine Nord-Süd-Nord- oder Süd-Nord-Süd-Magnetisierung, welche insbesondere zwei durch das Magnetfeldsensorelement der Drehwinkel-Indexeinheit erfassbare magnetische Zonenübergänge bzw. Grenzen ausprägen, wodurch die Erfassbarkeit dieses Indexmagneten hinsichtlich der Luftspaltlänge zwischen Indexmagnet und Magnetfeldsensorelement relativ robust und flexibel ist, also noch relativ große Luftspaltlängen möglich sind. Alternativ vorzugsweise ist die Magnetisierung des Indexmagneten als ein einzelnes Nord-Süd-Polpaar ausgebildet.

Es ist bevorzugt, dass der Indexmagnet mittels eines Verbindungselements formschlüssig mit dem Träger verbunden ist, wobei das Verbindungselement den Indexmagneten formschlüssig am Träger fixiert bzw. hält bzw. an den Träger anpresst und das Verbindungselement selbst ebenfalls formschlüssig mit dem Träger verbunden ist, insbesondere indem es den Träger an wenigstens einer Stelle umgreift und/oder diesen durchgreift, das Durchgreifen erfolgt dabei an einer oder mehreren Ausnehmungen des Trägers. Das Verbindungselement ist besonders bevorzugt elastisch ausgebildet.

Die formschlüssige Verbindung ist bevorzugt durch Heißverstemmen eingeprägt.

Der Indexmagnet ist alternativ vorzugsweise auf dem Träger mittels Vulkanisation befestigt, wobei der Indexmagnet insbesondere als Elastomerkörper mit magnetischen Partikeln ausgebildet ist.

Es ist bevorzugt, dass der Träger der Drehwinkel-Indexeinheit mit dem magnetischen Encoder mittels zumindest einer Vernietung, insbesondere Ultraschallvernietung, oder Heißverstemmung verbunden ist.

Unter dem Begriff "verbunden" wird bevorzugt auch der Begriff "befestigt" verstanden.

Es ist bevorzugt, dass der Indexmagnet Formelemente besitzt, die durch/ um geometrische Formen im Träger gesteckt werden um anschließen verprägt/ heißverstemmt zu werden.

Der Indexsensor umfasst zweckmäßigerweise wenigstens ein Magnetfeldsensorelement zur Erfassung des Indexmagneten.

Es ist bevorzugt, dass die Drehwinkel-Indexeinheit so ausgebildet ist, dass in einem definierten Umdrehungsbereich der Welle innerhalb von 360°, beispielsweise über einen Umdrehungsbereich von ±10°, insbesondere bei Geradeausfahrt, mittels des Indexmagneten eine Schaltinformation für das zugeordnete Magnetfeldsensorelement erzeugt.

Der Indexmagnet ist vorzugsweise gepresst oder spritzgegossen ausgebildet und ist komplett aus hartmagnetischem Material oder weist hartmagnetische Partikel auf. Insbesondere umfasst der Indexmagnet bezüglich seiner Magnetisierung einen einzigen Pol oder einen Hauptpol mit zwei beidseitig angrenzenden Nebenpolen - NSN oder SNS - oder alternativ mehrere alternierend magnetisierte Pole - NSNSNSNSNSNSNS...- entlang einer ringförmigen bzw. ringsegmentförmigen Linie, wobei besonders bevorzugt ein Pol verschieden ausgebildet ist als die anderen Pole, insbesondere bezüglich seiner Pollänge, und der Indexmagnet im Rahmen der Drehwinkel-Indexeinheit als Drehwinkelsensor, ganz besonders bevorzugt innerhalb von 360°, ausgebildet ist.

Die Erfindung bezieht sich außerdem auf die Verwendung der Sensoranordnung in Kraftfahrzeugen, insbesondere in der Lenkung.

Fig. 1 bis 7 zeigen schematische Ausführungsbeispiele.

Dabei zeigen
- Fig. 1 bis 5: verschiedene Ausführungsbeispiele des Trägers mit Indexmagneten, der Drehwinkel-Indexeinheit,
- Fig. 6: einen beispielhaften magnetischen Kreis des Drehmomentsensors, und
- Fig. 7: eine beispielhafte Sensoranordnung mit Drehmomentsensor und DrehwinkelIndexeinheit.

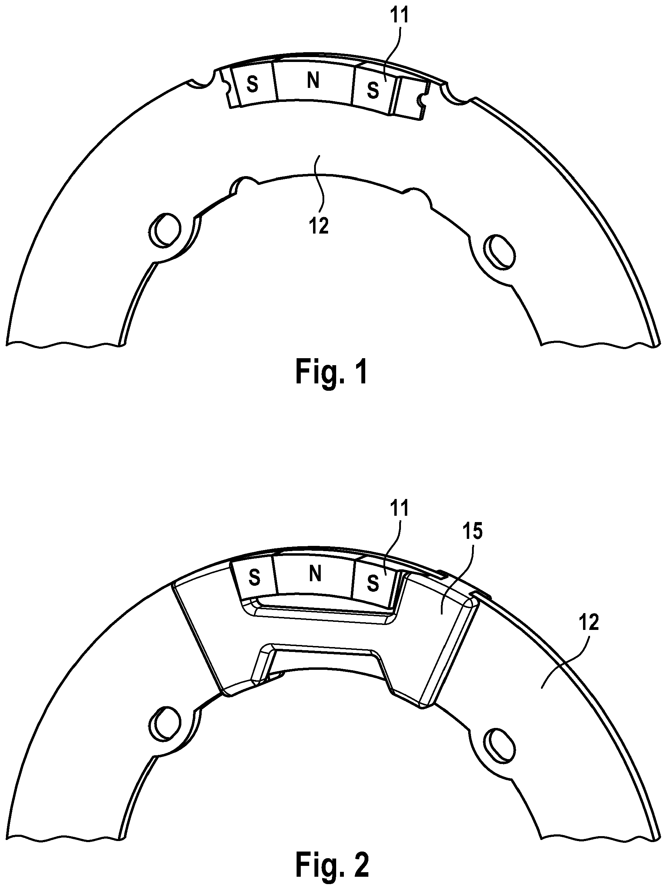

Fig. 1 zeigt Indexmagneten 11, als Permanentmagnet mit einer Süd-Nord-Süd-Magnetisierung ausgebildet, also einem Hauptpol N mit zwei angrenzenden Nebenpolen, wobei der Indexmagnet 11 direkt auf Träger 12 aus magnetisch leitfähigem Material, beispielhaft Stahl, aufgebracht ist, beispielsweise durch Kleben oder alternativ mittels Vulkanisation. Der Träger ist wie in den folgenden Beispielen auch ringförmig ausgebildet.

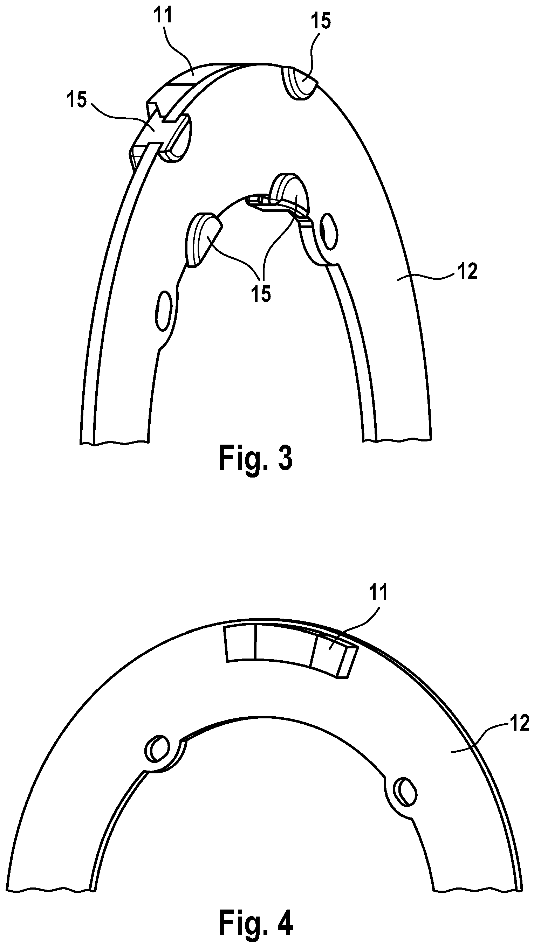

In Fig. 2 und 3 ist Indexmagnet 11 als relativ spröde ausgebildeter Permanentmagnet mittels einem Verbindungselement 15, welches elastisch ausgebildet ist, formschlüssig an Träger 12 befestigt bzw. gehalten. Verbindungselement 15 umgreift dabei den Träger 12 an vier Stellen und ist so ebenfalls formschlüssig mit diesem verbunden, wobei den umgreifenden Segmenten, die zusätzlich in jeweils eine Ausnehmung am Rand des Trägers 12 eingreifen beim Umgreifen, beispielhaft durch Heißverstemmen ihre Form eingeprägt ist. Diese Verbindung zwischen Träger 12 und Indexmagneten 11 zeichnet sich durch seine große Robustheit gegenüber Temperaturschwankungen aus. Das relativ spröde Magnetmaterial wird mit dem relativ elastischen Verbindungselement 15, das beispielgemäß ein dem Magnetmaterial des Indexmagneten 11 angepasstes Temperaturausdehnungsverhalten aufweist - verbunden. Diese Verbindung ist äußerst spannungsarm. Das Verbindungselement 15, das wiederum deutlich elastischer ist als das Magnetmaterial des Trägers 12, fängt Spannungen zwischen dem Träger 12 und dem Verbindungselement 15 ab.

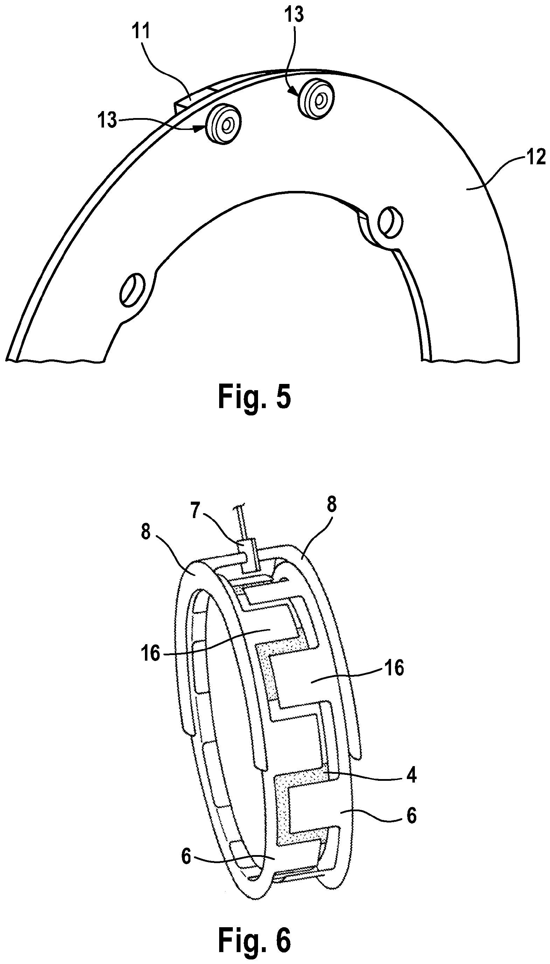

Der Indexmagnet 11 ist gemäß Fig. 4 und 5 direkt auf den Träger 12 gespritzt. Durch Löcher bzw. Ausnehmungen 13 in dem Träger 12 ist das Magnetmaterial-Kunststoff-Stoffgemisch des Indexmagneten 11 durchgespritzt bzw. durchgreift diese Ausnehmungen 13 und auf der Rückseite des Trägers 12 ist Indexmagnet 11 als formschlüssiges Element beispielsweise in Form eines Pilzkopfes ausgeformt. Diese Ausbildung ist besonders wirtschaftlich, da die Fertigungsschritte relativ einfach gehalten sind und keine weiteren Bauelemente erforderlich sind.

Anstelle der Umspritzung kann in einem alternativen, nicht dargestellten Ausführungsbeispiel der Indexmagnet auf seiner Rückseite Zapfen aus seinem Magnetmaterial-Kunststoff-Stoffgemisch aufweisen, die durch Löcher im Träger gesteckt werden und anschließend heißstemmt sind.

Fig. 6 zeigt beispielhaft den magnetischen Kreis des Drehmomentsensors, umfassend magnetischen Encoder 4, der ringförmig ausgebildet ist und bezüglich seiner äußeren Mantelfläche alternierend magnetisiert ist, Statorelemente 6 des Statorpakets, die bezüglich der nicht dargestellten Welle an einem Ring axial abragende Finger 16 aufweisen, die bezüglich der beiden Statorelemente 6 berührungslos alternierend ineinandergreifen und das Magnetfeld des Encoders 4 modulieren, und umfassend zwei Kollektorbleche 8, die das durch die Statorelemente 6 modulierte Magnetfeld berührungslos aufnehmen und dem Magnetfeldsensorelement 7 zur Drehmomentmessung zuführen.

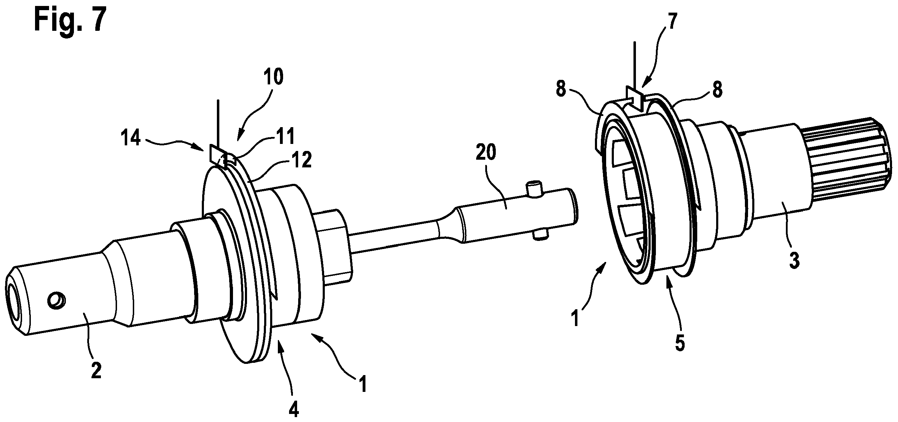

In Fig. 7 ist eine beispielhafte Sensoranordnung schematisch im auseinandergezogenen Zustand veranschaulicht. Drehmomentsensor 1 umfasst einen ersten 2 und einen zweiten 3 Wellenabschnitt, wobei auf dem ersten Wellenabschnitt 2 ringförmiger magnetischer Encoder 4 angeordnet ist und auf dem zweiten Wellenabschnitt 3 Statorpaket 5 mit den beiden, anhand der Fig. 6 besser sichtbaren, Statorelementen. Die beiden Wellenabschnitte 2, 3 sind durch Torsionsstab 20 miteinander verbunden. Den Statorelementen des Statorpakets 5 sind Kollektorbleche 8 berührungslos zugeordnet, die das durch das Statorpaket 5 modulierte magnetische Feld, was durch Encoder 4 erzeugt wird, dem Magnetfeldsensorelement 7 des Drehmomentsensors 1 zuführen. Die Drehwinkel-Indexeinheit 10 umfasst Träger 12 aus magnetisch leitfähigem Material zur magnetischen Abschirmung des Magnetfelds des Indexmagneten 11 gegenüber dem Drehmomentsensor 1, und umfasst ein schaltendes Magnetfeldsensorelement 14, welches das durch den Indexmagneten erzeugte Magnetfeld in einem definierten Winkelbereich erfasst. Indexmagnet 11 ist beispielgemäß direkt formschlüssig auf Träger 12 aufgebracht bzw. an diesem befestigt.

## Patentansprüche

1. Sensoranordnung, umfassend einen Drehmomentsensor (1) zur Erfassung des an eine Welle angreifenden Drehmoments, wobei die Welle des Drehmomentsensors zwei Wellenabschnitte (2, 3) umfasst, wobei auf dem ersten Wellenabschnitt (2) ein magnetischer Encoder (4) angeordnet ist und auf dem zweiten Wellenabschnitt (3) ein Statorpaket (5) mit wenigstens zwei magnetisch leitfähigen Statorelementen (6), welche das durch den magnetischen Encoder (4) des ersten Wellenabschnitts (2) erzeugte Magnetfeld leiten und direkt oder indirekt einem oder mehreren Magnetfeldsensorelementen (7) zur Drehmomenterfassung zuführen, und umfassend eine Drehwinkel-Indexeinheit (10), welche so ausgelegt ist, dass sie die Winkelstellung der Welle (2, 3) bezüglich eines definierten Drehwinkels und/oder eines definierten Drehwinkelbereichs erfassen und/oder identifizieren kann, und welche einen Indexmagneten (11) umfasst, welcher an einem Träger (12) befestigt ist, **dadurch gekennzeichnet, dass** der Träger (12) an dem magnetischen Encoder (4) befestigt ist.

2. Sensoranordnung nach Anspruch 1, **dadurch gekennzeichnet, dass** der Indexmagnet (11) als Permanentmagnet ausgebildet ist und der Träger (12) aus magnetisch leitfähigem Material zur Führung des magnetischen Feldes des Indexmagneten (11) ausgebildet ist.

3. Sensoranordnung nach Anspruch 1 oder 2, **dadurch gekennzeichnet, dass** der Träger (12) der Drehwinkel-Indexeinheit (10) ringförmig oder ringsegmentförmig ausgebildet ist und insbesondere an seinem Innenumfang mit dem magnetischen Encoder (4) oder zumindest einem der Statorelemente (6) verbunden ist.

4. Sensoranordnung nach mindestens einem der Ansprüche 1 bis 3, **dadurch gekennzeichnet, dass** die Drehwinkel-Indexeinheit (10) zumindest ein Sensorelement (14) umfasst, welches schaltend ausgebildet ist, insbesondere ein schaltendes Hallsensorelement.

5. Sensoranordnung nach mindestens einem der Ansprüche 1 bis 4, **dadurch gekennzeichnet, dass** der Indexmagnet (11) durch Spritzguss auf den Träger (12) aufgebracht ist und mit dem Träger (12) formschlüssig verbunden ist, insbesondere indem der Indexmagnet Ausnehmungen (13) des Trägers durchgreift oder den Träger (12) umgreift.

6. Sensoranordnung nach mindestens einem der Ansprüche 1 bis 5, **dadurch gekennzeichnet, dass** der Indexmagnet (11) mittels eines Verbindungselements (15) formschlüssig mit dem Träger (12) verbunden ist, wobei das Verbindungselement (15) den Indexmagneten (11) formschlüssig am Träger fixiert und das Verbindungselement (15) selbst ebenfalls formschlüssig mit dem Träger (12) verbunden ist, insbesondere indem es den Träger (12) an wenigstens einer Stelle umgreift und/oder diesen durchgreift.

7. Sensoranordnung nach Anspruch 6, **dadurch gekennzeichnet, dass** das Verbindungselement (15) elastisch ausgebildet ist.

8. Sensoranordnung nach mindestens einem der Ansprüche 5 bis 7, **dadurch gekennzeichnet, dass** die wenigstens eine formschlüssige Verbindung durch Heißverstemmen eingeprägt ist.

9. Sensoranordnung nach mindestens einem der Ansprüche 1 bis 5, **dadurch gekennzeichnet, dass** der Indexmagnet (11) auf dem Träger (12) mittels Vulkanisation befestigt ist, wobei der Indexmagnet insbesondere als Elastomerkörper mit magnetischen Partikeln ausgebildet ist.

10. Sensoranordnung nach mindestens einem der Ansprüche 1 bis 9, **dadurch gekennzeichnet, dass** der Träger (12) der Drehwinkel-Indexeinheit (10) mit dem magnetischen Encoder (4) mittels zumindest einer Vernietung, insbesondere Ultraschallvernietung, oder Heißverstemmung verbunden ist.

11. Verwendung der Sensoranordnung gemäß mindestens einem der Ansprüche 1 bis 10 in Kraftfahrzeugen, insbesondere in der Lenkung.

## Claims

1. Sensor arrangement, comprising a torque sensor (1) for detecting the torque acting on a shaft, wherein the shaft of the torque sensor comprises two shaft segments (2, 3), wherein a magnetic encoder (4) is arranged on the first shaft segment (2) and a stator packet (5) with at least two magnetically conductive stator elements (6) is arranged on the second shaft segment (3), which magnetically conductive stator elements conduct the magnetic field produced by the magnetic encoder (4) of the first shaft segment (2) and feed it directly or indirectly to one or a plurality of magnetic field sensor elements (7) for torque detection, and comprising a rotation angle index unit (10), which is designed so that it can detect and/or identify the angular position of the shaft (2, 3) relative to a defined rotation angle and/or a defined rotation angle range, and which comprises an index magnet (11), which is attached to a support (12), **characterized in that** the support (12) is fastened to the magnetic encoder (4).

2. Sensor arrangement according to Claim 1, **characterized in that** the index magnet (11) is in the form of a permanent magnet and the support (12) is made of magnetically conductive material for guiding the magnetic field of the index magnet (11).

3. Sensor arrangement according to Claim 1 or 2, **characterized in that** the support (12) of the rotation angle index unit (10) is of annular or ring segment form and is connected to the magnetic encoder (4) or at least one of the stator elements (6), in particular at its inner circumference.

4. Sensor arrangement according to at least one of the Claims 1 to 3, **characterized in that** the rotation angle index unit (10) comprises at least one sensor element (14), which is of switching form, in particular a switching hall sensor element.

5. Sensor arrangement according to at least one of the Claims 1 to 4, **characterized in that** the index magnet (11) is applied to the support (12) by injection molding and is connected to the support (12) in a form-fit manner, in particular by the index magnet passing through recesses (13) of the support or enclosing the support (12) .

6. Sensor arrangement according to at least one of the Claims 1 to 5, **characterized in that** the index magnet (11) is connected to the support (12) by means of a connecting element (15) in a form-fit manner, **characterized in that** the connecting element (15) fixes the index magnet (11) on the support in a form-fit manner and the connecting element (15) itself is likewise joined to the support (12) in a form-fit manner, particularly by enclosing the support (12) at at least one point and/or by passing through the support.

7. Sensor arrangement according to Claim 6, **characterized in that** the connecting element (15) is of elastic form.

8. Sensor arrangement according to at least one of the Claims 5 to 7, **characterized in that** the at least one form-fit connection is fixed by hot peening.

9. Sensor arrangement according to at least one of the Claims 1 to 5, **characterized in that** the index magnet (11) is fixed to the support (12) by means of vulcanization, **characterized in that** the index magnet is particularly in the form of an elastomer body having magnetic particles.

10. Sensor arrangement according to at least one of the Claims 1 to 9, **characterized in that** the support (12) of the rotation angle index unit (10) is connected to the magnetic encoder (4) by means of at least one rivet, in particular an ultrasonic rivet, or by hot peening.

11. Use of the sensor arrangement according to at least one of the Claims 1 to 10 in motor vehicles, in particular in the steering.

## Revendications

1. Système de détection comprenant un capteur de couple (1) destiné à détecter le couple agissant sur un arbre, dans lequel l'arbre du capteur de couple comprend deux parties d'arbre (2, 3), dans lequel un encodeur magnétique (4) est disposé sur la première partie d'arbre (2) et un paquet de stator (5), doté d'au moins deux éléments de stator magnétoconducteurs (6) conduisant le champ magnétique généré par l'encodeur magnétique (4) de la première partie d'arbre (2) et l'acheminant directement ou indirectement à un ou plusieurs éléments de détection de champ magnétique (7) destinés à détecter un couple, est disposé sur la seconde partie d'arbre (3), et comprenant une unité d'indexation d'angle de rotation (10) qui est conçue pour pouvoir détecter et/ou identifier la position angulaire de l'arbre (2, 3) par rapport à un angle de rotation défini et/ou à une plage d'angles de rotation définie, et qui comprend un aimant d'indexation (11) fixé sur un support (12), **caractérisé en ce que** le support (12) est fixé à l'encodeur magnétique (4) .

2. Système de détection selon la revendication 1, **caractérisé en ce que** l'aimant d'indexation (11) est réalisé sous la forme d'un aimant permanent et le support (12) est réalisé en un matériau magnétoconducteur pour guider le champ magnétique de l'aimant d'indexation (11).

3. Système de détection selon la revendication 1 ou 2, **caractérisé en ce que** le support (12) de l'unité d'indexation d'angle de rotation (10) est réalisé sous forme d'anneau ou de segment d'anneau et est en particulier relié sur sa périphérie intérieure à l'encodeur magnétique (4) ou à au moins l'un des éléments de stator (6).

4. Système de détection selon au moins l'une des revendications 1 à 3, **caractérisé en ce que** l'unité d'indexation d'angle de rotation (10) comprend au moins un élément de détection (14) conçu pour être du type à commutation, en particulier un élément de détection à effet Hall à commutation.

5. Système de détection selon au moins l'une des revendications 1 à 4, **caractérisé en ce que** l'aimant d'indexation (11) est appliqué sur le support (12) par moulage par injection et est relié par complémentarité de forme au support (12), en particulier du fait que l'aimant d'indexation s'engage à travers des évidements (13) du support ou entoure le support (12).

6. Système de détection selon au moins l'une des revendications 1 à 5, **caractérisé en ce que** l'aimant d'indexation (11) est relié par complémentarité de forme au support (12) au moyen d'un élément de liaison (15), dans lequel l'élément de liaison (15) fixe l'aimant d'indexation (11) par complémentarité de forme au support et l'élément de liaison (15) lui-même est également relié par complémentarité de forme au support (12), en particulier du fait qu'il entoure le support (12) en au moins un point et/ou qu'il s'engage à travers celui-ci.

7. Système de détection selon la revendication 6, **caractérisé en ce que** l'élément de liaison (15) est réalisé sous forme élastique.

8. Système de détection selon au moins l'une des revendications 5 à 7, **caractérisé en ce que** l'au moins une liaison par complémentarité de forme est gaufrée par calfatage à chaud.

9. Système de détection selon au moins l'une des revendications 1 à 5, **caractérisé en ce que** l'aimant d'indexation (11) est fixé sur le support (12) par vulcanisation, dans lequel l'aimant d'indexation est en particulier réalisé sous la forme d'un corps élastomère comportant des particules magnétiques.

10. Système de détection selon au moins l'une des revendications 1 à 9, **caractérisé en ce que** le support (12) de l'unité d'indexation d'angle de rotation (10) est relié à l'encodeur magnétique (4) au moyen d'au moins un rivetage, en particulier par rivetage par ultrasons ou par calfatage à chaud.

11. Utilisation du système de détection selon au moins l'une des revendications 1 à 10 dans des véhicules automobiles, en particulier dans le système de direction.
